# EUROPEAN PATENT APPLICATION

(11) **EP 1 481 939 A2**
(43) Date of publication of application: **01.12.2004**
(21) Application number: 04011520.6
(22) Date of filing: 14.05.2004
(51) Int. Cl.: B66F 9/065

(54) **Load handling machine**

(30) Priority: 20.05.2003 GB 0311520
(71) Applicant: J.C. BAMFORD EXCAVATORS LIMITED, Uttoxeter Staffordshire ST14 5JP (GB)
(72) Inventor: Jowett, Peter, Loughborough Leicestershire LE11 3QL (GB)
(74) Representative: Lucking, David John

(57) **Abstract**

A load handling machine (10) having a chassis (11) including a pair of frame members (24, 25, 30, 31) each including a generally upright plate-like part, which frame members (24, 25, 30, 31) extend generally parallel in a generally longitudinal direction of the machine and defining between them a space (26, 32), the frame members (24, 25) being rigid over the chassis length and at one longitudinal end of the chassis (11), each being shaped to provide a recess below upper surfaces of the frame members (24, 25, 30, 31), in which recess at least a portion of an axle (16, 18) is accommodated, there being a transverse axle mounting member (38) extending between the frame members (24, 25, 30, 31) in the region of the recess, substantially to close the space between the frame members (24, 25, 30, 31), and to provide a first axle mounting part which receives a first trunnion (41) of the axle (16, 18) which projects along a generally longitudinal axis (A) which is located between the upper and lower surfaces of the frame members (24, 25, 30, 31), and there being an end closure (46) which extends between the frame members (24, 25, 30, 31) substantially to close the space between the frame members (24, 25, 30, 31) at or adjacent the longitudinal ends of the frame members (24, 25, 30, 31), the end closure (46) including a depending part which provides a second axle mounting part (45) which receives a second trunnion (42) of the axle (16. 18) which projects oppositely of the first trunnion (41) along the generally longitudinal axis (A), the mounting parts together providing an axle mounting which is fixed relative to the remainder of the machine (10) which permits the axle (16, 18) to oscillate about the generally longitudinal axis, (A) but which does not permit translational movement of the axle (16, 18) relative to the chassis (11) and the axle (16, 18) carrying a pair of ground engaging wheels (19, 20), each of which is rotatable about a transverse axle axis.

## Description

### Description of Invention

This invention relates to a load handling machine of the kind having a working arm which may be manipulated to lift and lower loads in or on a working implement such as a loading forks, provided at or adjacent an end of the arm.

Such machines with varying geometries are known, but a common geometry is to provide an operator's cab at one side of the machine, and the working arm at the side of the cab, on or near a central axis of the machine. The working arm typically is mounted on a superstructure of the machine, at a position rearwardly of the operator's cab, and extends forwardly by the side of the cab, forwardly of a front of the superstructure. The arm is lifted and lowered by linear actuators, and commonly includes a plurality of telescopic sections, so that the load can not only be raised by the working arm, but moved towards and away from the superstructure, whilst the superstructure includes a ground engaging structure by means of which the machine may move on the ground to transport the load for example.

It will be appreciated that the working arm needs to be sufficiently strong and robust in order to handle a rated load; where the arm and load are heavy, particularly when the load is lifted to a significant height, the arm and load may apply high torsional forces to the superstructure of the machine. Such forces are aggravated where the ground is uneven, particularly transversely inclined when the loaded working arm may apply substantial sideways torsional loadings to the machine superstructure.

A machine with an alternative geometry is disclosed in French specification FR-A-2761972. In this document, a machine has an articulated chassis to effect steering of the machine, but importantly, there is a working arm which has a plurality of pivotally connected sections with a base section mounted on a machine superstructure. Relative pivoting between working arm sections is achieved by a complex arrangement of linear actuators which "push and pull" between the arm sections, and create visibility problems.

Moreover, the pivotal connection between the base section of the arm and the superstructure is at a longitudinal position forwardly of the axis of rotation of the front wheels. Thus to maintain the pivotal connection as close as possible to the axis, the pivotal connection has to be raised up which can lead to much reduced visibility.

According to the invention we provide a load handling machine having a chassis including a pair of frame members each including a generally upright plate-like part, which frame members extend generally parallel in a generally longitudinal direction of the machine and defining between them a space, the frame members being rigid over the chassis length and at one longitudinal end of the chassis, each being shaped to provide a recess below upper surfaces of the frame members, in which recess at least a portion of an axle is accommodated, there being a transverse axle mounting member extending between the frame members in the region of the recess, substantially to close the space between the frame members, and to provide a first axle mounting part which receives a first trunnion of the axle which projects along a generally longitudinal axis which is located between the upper and lower surfaces of the frame members, and there being an end closure which extends between the frame members substantially to close the space between the frame members at or adjacent the longitudinal ends of the frame members, the end closure including a depending part which provides a second axle mounting part which receives a second trunnion of the axle which projects oppositely of the first trunnion along the generally longitudinal axis, the mounting parts together providing an axle mounting which is fixed relative to the remainder of the machine which permits the axle to oscillate about the generally longitudinal axis but which does not permit translational movement of the axle relative to the chassis, and the axle carrying a pair of ground engaging wheels, each of which is rotatable about a transverse axle axis.

The frame members may be shaped at the ends so that at least a portion of the axle is located below the tops of the frame members. Preferably, there is provided an end closure for the frame members, which may also provide a part of the axle mounting.

Preferably the first trunnion is received in an opening in the transverse mounting member, and the second trunnion being received in an axially coincident opening provided in the end closure.

The ground engaging wheels may be steerable, having hubs pivotally mounted on the axle body, for pivoting movement about respective generally upright axes.

Preferably, the machine includes front frame members and rear frame members, the frame members extending generally parallel in a generally longitudinal direction of the machine, and defining between them a space, the rear frame members being wider spaced apart than the front frame members, with one of the rear frame members being offset from its adjoining front frame member.

Axles may be connected to one or both of the front or rear frame members in accordance with the invention.

Upper and lower closure plates may be secured to the upright plate-like parts so that where provided, the frame part has a generally box section configuration.

The rear frame part of the chassis may be integral with or securely and rigidly connected to the front frame part.

Embodiments of the invention will now be described with reference to the accompanying drawings in which:-
FIGURE 1 is a side illustrative view of a load handling machine in accordance with the present invention, showing a working arm in a fully lowered condition;
FIGURE 2 is a view similar to figure 1, but emphasising the configuration of a chassis of the machine, and showing the working arm in a raised operative condition;
FIGURE 3 is a top plan view of the chassis only of the machine of figures 1 and 2;
FIGURE 4 is an illustrative perspective partly exploded view showing the means by which an axle of the machine of figures 1 and 2 is mounted on the chassis.

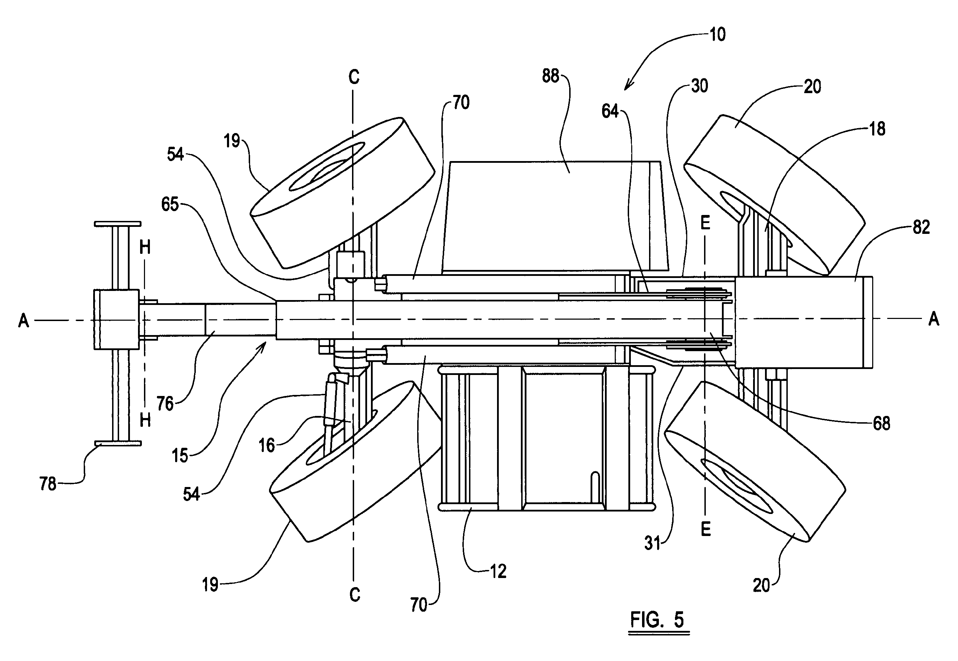

FIGURE 5 is a top plan view of the machine shown in Figure 1.

Referring to the drawings, a load handling machine 10 has a chassis 11, an operator's cab 12, and a working arm 15. A ground engaging structure including a front axle 16 and a rear axle 18 is carried by the chassis 11, each axle 16, 18 having a pair of ground engaging wheels 19, 20 respectively.

The chassis 11 includes a generally elongate front frame part 22, and a rear frame part 23, rigidly connected together or integrally provided. The front frame part 22 includes a pair of generally elongate frame members 24, 25 which are each of upright plate-like configuration, which extend generally parallel to one another and have between them, a space 26. Each front frame member 24, 25 has a substantial thickness and thus strength, but to increase the torsional stiffness of the front frame part 22, top and bottom closure .plates 27, 28 are provided, so that at least in regions of the front frame part 22 where the top and bottom closure plates 27, 28 are provided, the chassis 11 is of a box section configuration.

The rear frame part 23 also has a pair of side members 30, 31. which provide a space 32 between them, the rear frame part 23 also including top and bottom closure plates 34, 35 to increase its strength.

The front frame 22 has a transverse mounting member 38 at a front end, which extends between the front frame members 24, 25 and provides part of a mounting for the front axle 16.

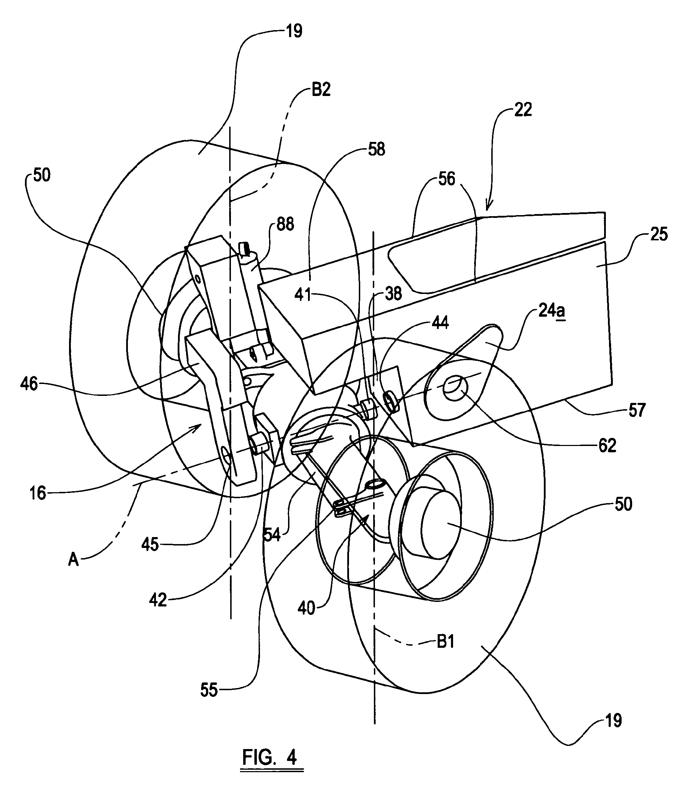

The front axle 16, as best seen in figure 4, includes a body 40 from which extends a pair of trunnions 41, 42, one of the pair, trunnion 41, extending rearwardly of the body 40 along a generally longitudinal machine axis A about which in use, the axle 16 may pivot. In one example, where the rear axle of the machine is rigidly fixed, the front axle 16 may be allowed to oscillate in response to changes in ground level experienced by the wheels 19 about the machine axis A, the other 42 of the trunnions also extending along machine axis A but forwardly of the body 40 of the axle 16. Whilst the front axle 16 may be allowed to oscillate, the axle 16 is not a sprung axle in that the point of the connection between the front axle 16 and the front frame 22 about which the axle 16 may oscillate is fixed relative to the remainder of the machine 10.

In the example shown though, the front axle 16 is fixed relative to the front frame part 22 and does not oscillate in response to ground levels experienced as the machine moves, although the axle 16 may be pivoted under the control of an actuator 88, for levelling purposes, particularly during loading and unloading.

The axle 16 is mounted by the front frame 22 by the rearwardly extending trunnion 41 being received in an opening 44 in the transverse mounting member 38, and the forwardly extending trunnion 42 being received in an axially coincident opening 45 in an end closure 46 which is secured to the front end of the front frame 22. The front frame members 24, 25 are cut away to provide a recess below upper surfaces of the frame members 24, 25 to accommodate at least a portion of the front axle 16 body 40 at their front ends.

The front wheels 19 carried by the front axle 22 may be steerable wheels, having hubs 50 pivotally mounted on the axle body 40, for pivoting movement about respective generally upright axes B1 and B2. Steering may be effected by any desired means, there being shown in figure 4 a hydraulically powered track rod 54 extending between respective levers 55 of the hubs 50, as is conventional in the art.

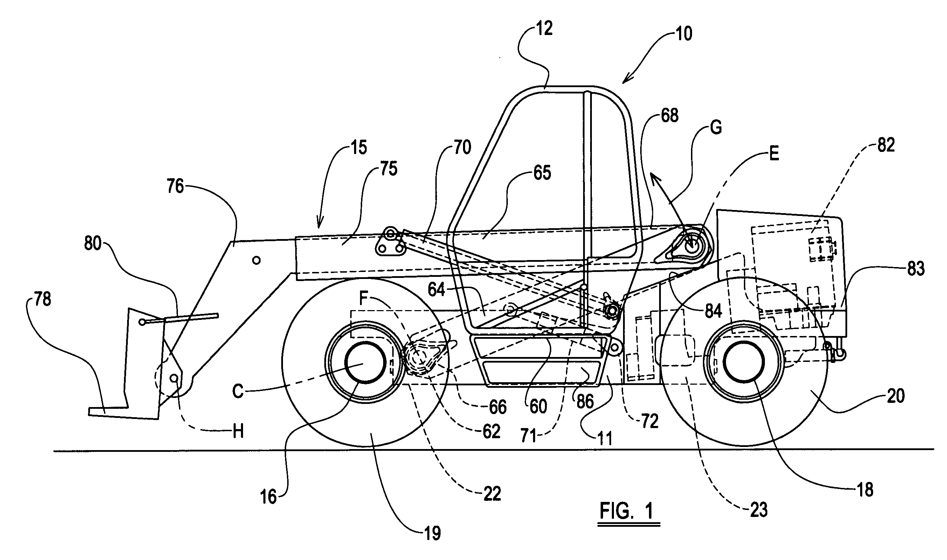

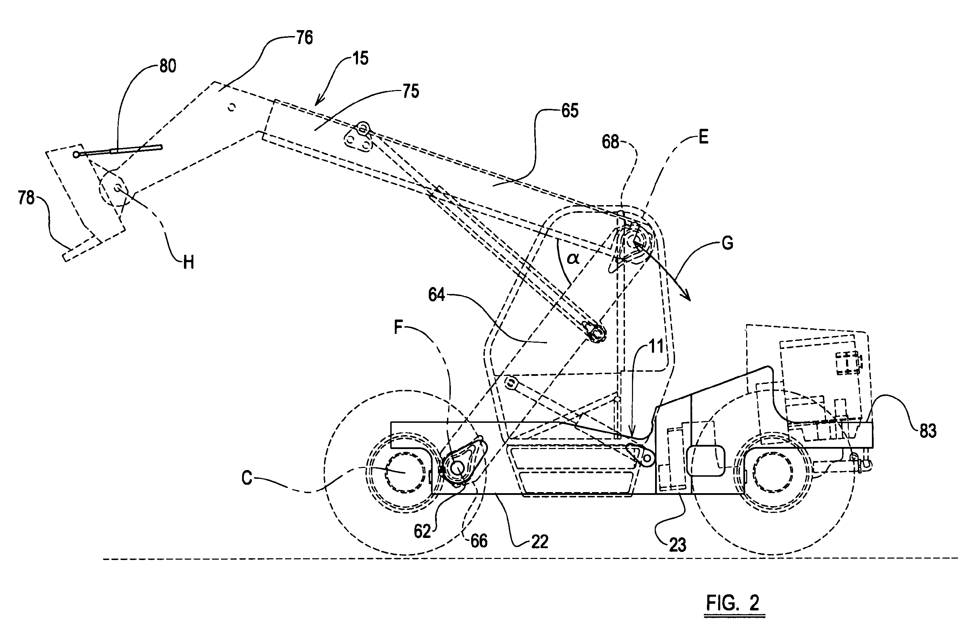

Thus a first transverse axis C about which the wheels 19 rotate, at least when in their straight ahead positions shown figures 1 and 2, is located between tops 56 and bottoms 57 of the front frame members 24, 25, as is the horizontal axis A.

The rear axle 18 is similarly mounted by the rear frame part 23 as best seen in figure 2, with parts corresponding to those labelled for the front axle 16 mounting being indicated by the same reference numerals but with a prime sign added. However, where the front axle 16 is rigidly mounted, the rear axle 18 is able to oscillate about a longitudinal axis D in response to ground conditions as the machine moves over the ground.

Desirably, the rear wheels 20 are steerable in a similar manner to the front wheels 19, so that the machine 10 may be two or four wheel steered depending on selected operator controls. The longitudinal axis D about which the rear axle 18 may oscillate is preferably coincident with the longitudinal machine axis A about which the front axle 16 may pivot as shown, or is at least parallel and close thereto.

It can be seen that the rear frame side members 30, 31 are generally wider spaced apart than the front frame members 24, 25, with one of the rear frame side members, member 31, offset from its adjoining front frame member 25. The front frame members 24, 25 are more closely spaced than the rear frame side members 30, 31 for maximum front frame 22 strength, required for a reason explained below. Like the front frame 22, the rear frame 23 includes top and bottom closure plates indicated at 58, 59, to add strength and stiffness.

The operator's cab 12 is at least partly supported by the front frame 22, on a transversely extending support member 60 which is rigidly fixed to one of the front frame members 25, and thus the cab 12 is positioned at one side of the machine 10.

The working arm 15 is located generally transversely centrally of the machine 10, but is mounted at a longitudinal position 62 between the cab 12 and the first transverse axis C on a mounting provided by the front frame part 22, close to the axle 16.

The working arm 15 includes a first part 64 and a second part 65, which parts are pivotally connected for relative pivotal movement about a second transverse axis E, when an angle ∝ between them is adjusted. At a first end 66, the first arm part 64 is pivotally mounted at the mounting position 62 of the front frame 22, for pivotal movement about a third transverse axis F, in a mounting which extends between the front frame members 24, 25. The working arm 15 is mounted on the front frame 22 such that it is pivotable relative to the chassis 11 so as to bring the pivotal connection between the first and second arm parts 64, 65 to a position alongside the cab 12.

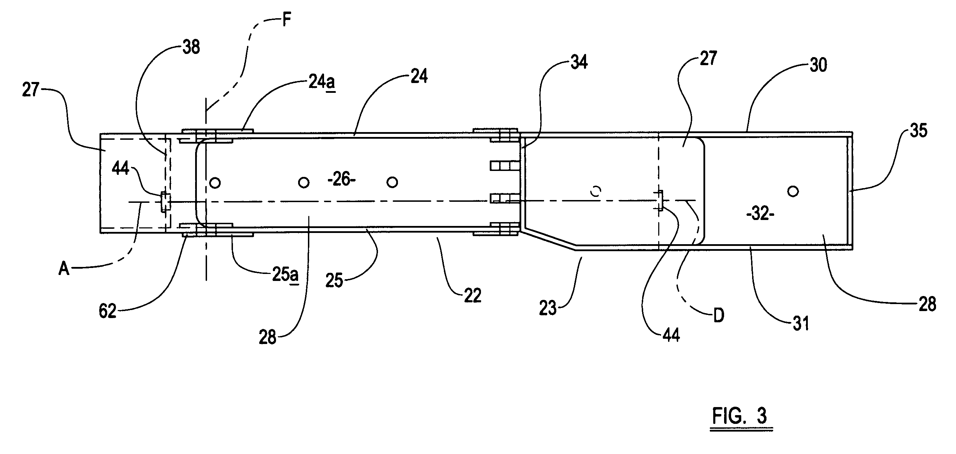

As shown in figure 3, in the regions of the mounting position 62, the front frame members 24, 25 are each reinforced with a reinforcing plate 24a, 25a, there being an opening through the front frame members 24, 25 and the reinforcing plates 24a, 25a to receive a pivot pin or the like which forms the pivotal mounting of the first arm part 64 to the front frame 22.

At the opposite end to the mounting 62 to the front frame 22, the first arm part 64 is pivotally connected to a first end 68 of the second arm part 65, adjustment of the angle ∝ between the first and second arm parts 64, 65 being achieved by the operation of one or a pair or more of first linear hydraulic actuators 70 which act between the first and second arm parts 64, 65, under the control of an operator.

To pivot the first arm part 64 about the third transverse axis F, one or a pair or more of second linear hydraulic actuators 71 is operated by the operator. The second actuator or actuators 71 each extend between a mounting 72 provided by the front frame 22 (in a similar manner to the mounting 62 provided by the front frame 22 for the first arm part 64) and the first arm part 64, the actuator or actuators 71 each extending rearwardly from the first arm part 64.

The second arm part 65 includes a plurality of relatively telescopic sections, two in the example described with reference to the drawings, at 75, 76, the outermost section 76 carrying at a second end of the second arm part 65, a load handling implement such as a loading forks 78, for handling loads.

As will be appreciated from figure 2, when it is desired to move a load handling implement 68 and home load towards and away from the remainder of the machine 10, this may be achieved by any or a combination of the following, namely:-
i. changing the length of the first linear actuator 70 or actuators to pivot the second arm part 65 about the second transverse axis E;
ii. changing the length of the second linear actuator 71 to pivot the first arm part 64 about the third transverse axis F, which has the result of moving second transverse axis E along an arc G;
iii. Extending/retracting the telescopic sections 75, 76.

It can be seen that there is a linear actuator 80 which extends between the (outermost telescopic section 76 of the) second arm part 65 which when operated causes pivotal movement of the load handling implement 78 about a fifth transverse axis H of the working arm 15, so that the attitude of the load handling implement 78 may be maintained during lifting and lowering of the working arm 15, and otherwise adjusted.

In this example, an engine 82 which provides power for machine 10 operation, is provided behind the operator's cab 12, and is supported on a support part 83 of the rear frame part 23. A cooling pack or packs for cooling engine fluids/hydraulic fluid used to operate the various actuators 70,71, 80 etc., a battery and oil tank 88 are, in this example accommodated on the other side of the working arm to the cab 12m but may alternatively be accommodated behind the cab 12.

A fluid reservoir, such as a fuel tank 86 may be accommodated beneath the transverse cab 12 support member 60.

By virtue of the mounting 62 of the working arm 15 directly by the front frame part 22, torsional forces arising, for example when the machine 10 is on transversely uneven ground and with the working arm 15 in a raised condition, are dissipated directly into front frame members 24, 25 of the chassis 11, and not into any machine superstructure as a whole, as with conventional machines. This provides for increased structural torsional rigidity of the machine 10 during high load, high lifting conditions.

Further, because the mounting position 62 for the working arm 15 is close to the axis C of rotation of the front wheels 19, between the front axle 16 and the cab 12, torsional loads are, dissipated in relatively short extents of the frame members 24, 25 which can thus be made locally sufficiently strong for rated loadings.

To provide for the working arm 15 to be securely maintained in a set position while the machine 10 is travelling over the ground, it can be seen that the rear side frame members 30, 30 of the rear frame part 23, adjacent to the front frame part 22, are shaped to provide a support surface 84 on which the first arm part 64 may rest when in a fully lowered condition.

Other features of the machine 10 will be apparent to those skilled in the art. For example, although not all shown, dampers would need to be provided to damp oscillations of the front 16 and/or rear axles 18, where oscillation is permitted, which dampers would extend between the axle body 40 and a part of a superstructure of the machine 10.

The superstructure of the machine 10 may include body panels to conceal and mount working parts of the machine 10 including these not described above, such as a hydraulic pump, transmission, battery and so on, which may be accommodated where required.

Various modifications may be made to the machine 10 described without departing from the scope of the invention.

For example, in the examples described with reference to the drawings, the front frame part 22 and the rear frame part 23 include top and bottom closure plates 58, 59 to add strength and stiffness, but in another example, one or both of the front and rear frame parts 22, 23 may be strengthened by another means. For example, one or both of the frame parts 22, 23 may be of H cross section with internal strengthening plates, and/or partly strengthened by top and/or bottom closure plates, and partly by internal plates.

## Claims

1. A load handling machine (10) having a chassis (11) including a pair of frame members (24, 25, 30, 31) each including a generally upright plate-like part, which frame members (24, 25, 30, 31) extend generally parallel in a generally longitudinal direction of the machine and defining between them a space (26, 32), the frame members (24, 25) being rigid over the chassis length and at one longitudinal end of the chassis (11), each being shaped to provide a recess below upper surfaces of the frame members (24, 25, 30, 31); in which recess at least a portion of an axle (16, 18) is accommodated, there being a transverse axle mounting member (38) extending between the frame members (24, 25, 30, 31) in the region of the recess, substantially to close the space between the frame members (24, 25, 30, 31), and to provide a first axle mounting part which receives a first trunnion (41) of the axle (16, 18) which projects along a generally longitudinal axis (A) which is located between the upper and lower surfaces of the frame members (24, 25, 30, 31), and there being an end closure (46) which extends between the frame members (24, 25, 30, 31) substantially to close the space between the frame members (24, 25, 30, 31) at or adjacent the longitudinal ends of the frame members (24, 25, 30, 31), the end closure (46) including a depending part which provides a second axle mounting part (45) which receives a second trunnion (42) of the axle (16. 18) which projects oppositely of the first trunnion (41) along the generally longitudinal axis (A), the mounting parts together providing an axle mounting which is fixed relative to the remainder of the machine (10) which permits the axle (16, 18) to oscillate about the generally longitudinal axis, (A) but which does not permit translational movement of the axle (16, 18) relative to the chassis (11) and the axle (16, 18) carrying a pair of ground engaging wheels (19, 20), each of which is rotatable about a transverse axle axis.

2. A machine (10) according to claim 1 wherein the first trunnion (41) is received in an opening in the transverse mounting member (38), the second trunnion (42) being received in an axially coincident opening provided in the end closure (46).

3. A machine (10) according to claim 2 or 3 wherein the ground engaging wheels (19, 20) are steerable, having hubs (50) pivotally mounted on the axle body (40), for pivoting movement about respective generally upright axes (B1, B2).

4. A machine (10) according to any preceding claim wherein the machine includes front frame members (24, 25) and rear frame members (30, 31), the frame members (24, 25, 30, 31) extending generally parallel in a generally longitudinal direction of the machine (10), and defining between them a space (26, 32).

5. A machine (10) according to claim 4 wherein at both the front and rear frame members (24, 25, 30, 31) there is a transverse axle mounting member (38) extending between the frame members (24, 25, 30, 31) in the region of the recess, substantially to close the space between the frame members (24, 25, 30, 31), and to provide a first axle mounting part which receives a first trunnion (41) of the axle (16, 18) which projects along a generally longitudinal axis (A) which is located between the upper and lower surfaces of the frame members (24, 25, 30, 31), and there being an end closure (46) which extends between the frame members (24, 25, 30, 31) substantially to close the space between the frame members (24, 25, 30, 31) at or adjacent the longitudinal ends of the frame members (24, 25, 30, 31), the end closure (46) including a depending part which provides a second axle mounting part (45) which receives a second trunnion (42) of the axle (16. 18) which projects oppositely of the first trunnion (41) along the generally longitudinal axis (A), the mounting parts together providing an axle mounting which is fixed relative to the remainder of the machine (10) which permits the axle (16, 18) to oscillate about the generally longitudinal axis, (A) but which does not permit translational movement of the axle (16, 18) relative to the chassis (11) and the axle (16, 18) carrying a pair of ground engaging wheels (19, 20), each of which is rotatable about a transverse axle axis.

6. A machine according to claim 1 wherein upper and lower closure plates are secured to the upright plate-like parts so that where provided, the frame part (22, 23) has a generally box section configuration.

7. A machine according to claim 4 wherein the rear frame part (23) of the chassis (11) is integral with or securely and rigidly connected to the front frame part (22).

8. A machine according to claim 4 wherein the rear frame members (30, 31) are wider spaced apart than the front frame members (24, 25), with one of the rear frame members (31) being offset from its adjoining front frame member (25).
